# NEUE EUROPÄISCHE PATENTSCHRIFT

(11) **EP 0 721 868 B2**
(45) Veröffentlichungstag und Bekanntmachung des Hinweises auf die Entscheidung über den Einspruch: **02.05.2002**
(45) Hinweis auf die Patenterteilung: 06.05.1999
(21) Anmeldenummer: 95119927.2
(22) Anmeldetag: 18.12.1995
(51) Int. Cl.: B60R 22/405

(54) **Sensor für einen Sicherheitsgurtaufroller**
Sensor for safety belt retractor
Capteur de mouvement pour enrouleur de ceinture de sécurité

(30) Priorität: 12.01.1995 DE 19500722
(43) Veröffentlichungstag der Anmeldung: 17.07.1996
(73) Patentinhaber: TRW Occupant Restraint Systems GmbH & Co. KG, 73551 Alfdorf (DE)
(72) Erfinder: Kielwein, Thomas, D-73569 Eschach (DE); Bareiss, Rainer, D-73553 Alfdorf (DE)
(74) Vertreter: Degwert, Hartmut, Dipl.-Phys.

(56) Entgegenhaltungen:
- EP-A- 0 315 955
- EP-A- 0 700 812
- DE-A- 4 109 179
- DE-C- 2 658 747
- FR-A- 2 258 662
- US-A- 4 556 177

## Beschreibung

Die Erfindung betrifft einen Sensor gemäß dem Oberbegriff des Anspruchs 1.

Solche Sensoren sind auf dem Gebiet der Insassenrückhaltesysteme gut bekannt und dienen dazu, die Sperrung eines Sicherheitsgurtaufrollers fahrzeugsensitiv aufzulösen. Die Auflösung wird entweder von Lageänderungen des Fahrzeugs oder von Beschleunigungen/Verzögerungen des Fahrzeugs bewirkt, die jeweils eine vorbestimmte Auslöseschwelle überschreiten. Ein Überschreiten der Auslöseschwelle hat zur Folge, daß die Sensorkugel aus der Mulde der Kugelaufnahme herausbewegt wird. Dies wird bei einer Lageänderung des Fahrzeugs dadurch hervorgerufen, daß die Kugelaufnahme mit der zugehörigen Mulde relativ zur Richtung der an der Sensorkugel angreifenden Schwerkraft so weit bewegt wird, daß die Sensorkugel in der Mulde hochrollt. Bei einer die vorbestimmte Auslöseschwelle überschreitenden Beschleunigung oder Verzögerung des Fahrzeugs wird die Sensorkugel dagegen durch die auf sie einwirkenden Trägheitskräfte in der Mulde der Kugelaufnahme hochbewegt. Dies hat jeweils zur Folge, daß der auf der Sensorkugel aufliegende Sensorhebel von der Mulde der Kugelaufnahme wegbewegt wird und in Eingriff mit einer Steuerscheibe eines Sicherheitsgurtaufrollers gelangt, welche durch diesen Eingriff drehfest gehalten wird und in bekannter Weise eine Blockierung des Gurtbandabzugs von dem Sicherheitsgurtaufroller auslöst.

In letzter Zeit werden Sicherheitsgurtaufroller, die bis jetzt üblicherweise fest mit Teilen der Fahrzeugkarosserie verbunden waren, in zunehmendem Maße auch in Lehnen eines Fahrzeugsitzes angebracht. Da diese Lehnen neigungsverstellbar sind, ist es erforderlich, eine gegenläufige Verstellung der Sensororientierung vorzunehmen, damit sich der Sensor jederzeit in seiner konstruktiv vorgesehenen Betriebslage befindet. Ein Ausführungsbeispiel eines in der Orientierung verstellbaren Sensors läßt sich der EP-A-0 351 551 entnehmen, in der eine Sicherheitsgurtanordnung an einem neigungsverstellbaren Kraftfahrzeugsitz beschrieben ist, bei welcher der die Blockierung des Sicherheitsgurtaufrollers fahrzeugsensitiv auslösende Sensor im Hinblick auf ein Kompensieren der Neigungsänderungen der Sitzlehne um die Achse der Steuerscheibe des Sicherheitsgurtaufrollers verschwenkt werden kann. Ein Vorteil einer solchen Ausführungsform liegt darin, daß sich der Abstand zwischen dem Sensorhebel und der Steuerscheibe bei einem Verschwenken des Sensors nicht ändert. Ein Nachteil einer solchen Ausführungsform liegt in dem Raumbedarf eines solchen Sensors, da dieser bei einem Verschwenken aufgrund des großen Abstandes zwischen Sensor und Schwenkachse einen großen Raum überstreicht.

In der EP-A-0 700 812 ist eine Sicherheitsgurtanordnung an einem neigungsverstellbaren Kraftfahrzeugsitz beschrieben, zu der ein Sensor mit einer Haltevorrichtung, einer Sensorkugel, einer Kugelaufnahme, einem Metallgewicht und einem Sensorhebel gehört. Das Metallgewicht ist an der Unterseite der Kugelaufnahme befestigt, und die Kugelaufnahme ist so an der Haltevorrichtung aufgehängt, daß sie zusammen mit dem Metallgewicht um eine durch den Mittelpunkt der Sensorkugel verlaufende Achse schwingen kann. Bei Neigungsänderungen der Sitzlehne behält die Kugelaufnahme daher ihre Orientierung gegenüber der Vertikalen bei. Die Druckschrift EP-A-0 700 812 fällt unter Artikel 54(3) EPÜ und ist daher nur für die Neuheit der Erfindung relevant.

Ein Sensor mit den Merkmalen des Oberbegriffs des Anspruchs 1 ist aus der DE-A-41 09 179 bekannt und enthält eine Kugelaufnahme, die eine Mulde zur Aufnahme einer Sensorkugel aufweist, und einen auf der Sensorkugel aufliegenden, an der Kugelaufnahme schwenkbar gelagerten Sensorhebel. Die Kugelaufnahme und der Sensorhebel sind drehbar um eine Achse angeordnet, die durch den Mittelpunkt der Sensorkugel verläuft. Die Kugelaufnahme ist an ihrem unteren Ende mit einem Fortsatz versehen, der eine Ausgleichsmasse aufweist, die bei Verstellen der Sitzlehne eine rotatorische Verstellung der Kugelaufnahme um die Achse entsprechend der an ihr wirkenden Schwerkraft bewirkt.

Aufgabe der Erfindung ist, einen Sensor zu schaffen, bei dem der zum Schwenken notwendige Raum vermindert ist und dennoch der Abstand zwischen der Spitze des Sensorhebels und dem Umfang der Steuerscheibe unverändert bleibt.

Diese Aufgabe wird bei einem Sensor der eingangs angegebenen Art mit den Merkmalen des kennzeichnenden Teils des Anspruchs 1 gelöst. Durch die Verwendung eines translatorisch bewegbaren Verstellelements anstelle einer Ausgleichsmasse ergibt sich ein besonders kompakter Sensor.

Weitere vorteilhafte Ausgestaltungen der Erfindung ergeben sich aus den Unteransprüchen.

Die bevorzugte Ausführung der Erfindung wird nachfolgend unter Bezugnahme auf die beigefügte Zeichnung beschrieben. In dieser zeigen:
- Fig. 1: einen erfindungsgemäßen Sensor in einer nicht verschwenkten Stellung in einer schematischen Seitenansicht;
- Fig. 2: den Sensor von Fig. 1 in einer teilgeschnittenen Vorderansicht; und
- Fig. 3: den Sensor von Fig. 1 in zwei verschwenkten Stellungen in einer schematischen Seitenansicht.

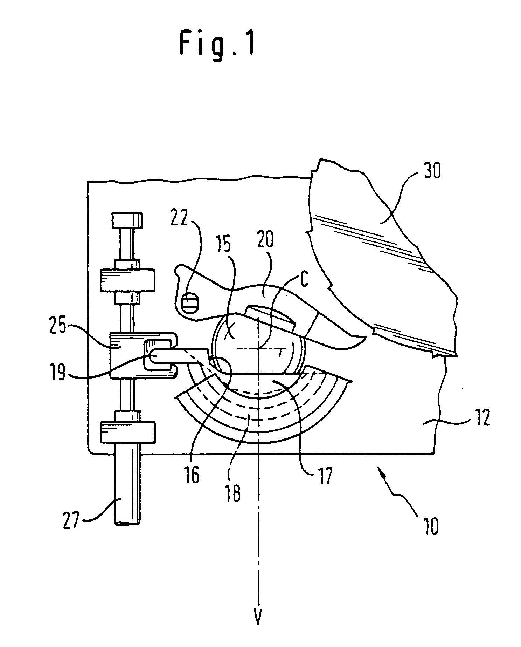

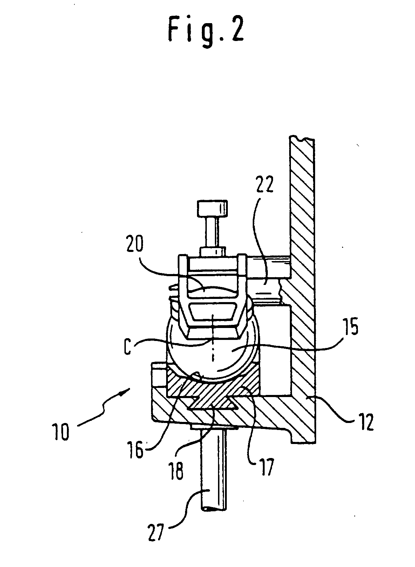

In Fig. 1 ist ein Sensor 10 für die fahrzeugsensitive Auslösung des Sperrmechanismus eines (nicht dargestellten) Sicherheitsgurtaufrollers in der Lehne eines Fahrzeugsitzes dargestellt. Dieser Sensor 10 umfaßt eine Grundplatte 12 und eine Kugelaufnahme 17, die eine Mulde 16 zur Aufnahme einer Sensorkugel 15 aufweist und mit der Grundplatte 12 über eine deutlicher in Fig. 2 zu sehende Schwalbenschwanzführung 18 verbunden ist, die zum Mittelpunkt C der Sensorkugel 15 konzentrisch ist. Die Kugelaufnahme 17 ist mit einem Fortsatz 19 versehen, an dem ein Verstellelement 25 angreift. Eine translatorische Verstellung dieses Verstellelements 25 bewirkt über den Fortsatz 19 ein Verschwenken der Kugelaufnahme 17 in der Schwalbenschwanzführung 18 um den Mittelpunkt C der Sensorkugel 15.

Auf der in der Mulde der Kugelaufnahme 17 angeordneten Sensorkugel 15 liegt ein Sensorhebel 20 auf, der an einem Bolzen 22 gelagert ist, der ebenfalls mit der Grundplatte 12 verbunden ist. Der Sensorhebel 20 ist dafür vorgesehen, bei Auslösung des Sensors 10 durch eine Lageänderung der Sensorkugel 15 in der Kugelaufnahme 17 verschwenkt zu werden und mit der Spitze an seinem freien Ende in die Verzahnung einer schematisch dargestellten Steuerscheibe 30 des Sicherheitsgurtaufrollers einzugreifen, wodurch diese drehfest gehalten wird und eine Sperrung des Sicherheitsgurtaufrollers fahrzeugsensitiv auslöst. Dies ist dem Fachmann auf dem Gebiet der Fahrzeuginsassen-Sicherheitssysteme gut bekannt, weshalb hier weder auf das Auslösen des Sensors noch auf den Sicherheitsgurtaufroller weiter eingegangen wird.

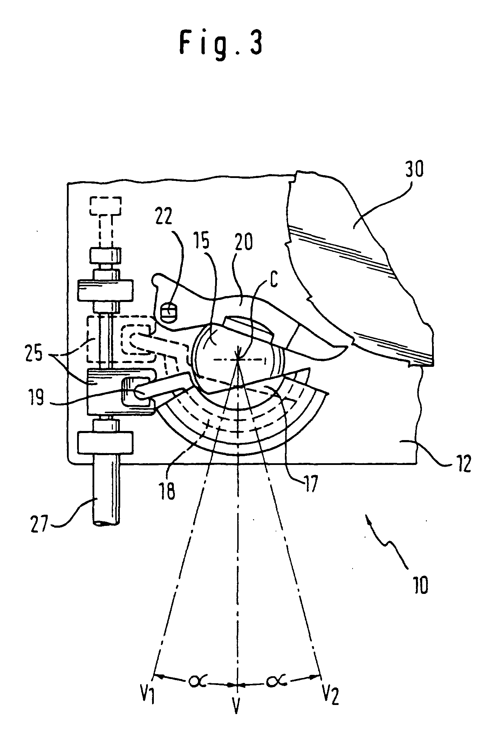

In Fig. 1 ist der Sensor 10 in seiner konstruktiv vorgesehenen Betriebslage dargestellt, in welcher die Richtung der an der Senorkugel 15 angreifenden Schwerkraft mit der Achse V zusammenfällt. Ändert sich ausgehend von dieser Lage die Orientierung des Sensors 10, so nimmt die Wirkrichtung der an der Sensorkugel 15 angreifenden Schwerkraft beispielsweise die in Fig. 3 dargestellten Richtungen V₁ oder V₂ an. Damit gewährleistet ist, daß der Sensor 10 auch in diesen Stellungen ein Auslöseverhalten aufweist, das mit dem konstruktiv vorgesehenen übereinstimmt, wird die Kugelaufnahme 17 über den Fortsatz 19 von dem Verstellelement 25 verschwenkt. Dies ist in Fig. 3 zu sehen, wobei das Verstellelement 25 und die Kugelaufnahme 17 mit durchgezogenen Linien in der der Wirkrichtung V₂ zugeordneten Stellung und mit gestrichelten Linien in der der Wirkrichtung V₁ zugeordneten Stellung dargestellt sind. Aufgrund der speziellen Gestaltung der Schwalbenschwanzführung 18 ändert sich bei einem Verschwenken der Kugelaufnahme 17 die Relativstellung zwischen der Sensorkugel 15 und der Steuerscheibe 30 nicht. Somit bleibt neben dem Auslöseverhalten des Sensors 10 auch der Abstand zwischen dem freien Ende des Sensorhebels 20 und dem Umfang der Steuerscheibe 30 unverändert. Da nur die Kugelaufnahme 17 verschwenkt wird, ist der für den Sensor 10 notwendige Einbauraum sehr klein.

Das Verschwenken der Kugelaufnahme 17 aus der in Fig. 1 dargestellten Neutrallage in die in Fig. 3 dargestellten verschwenkten Stellungen wird von einer Translationsbewegung des Verstellelements 25 bewirkt, die von einer Verstellvorrichtung 27 hervorgerufen wird, deren sensorseitiges Ende mit der Sensorgrundplatte 12 verbunden ist. Diese Verstellvorrichtung 27 kann ein Zug/Schubglied wie ein Bowdenzug sein, mit welchem das Verstellelement 25 fest verbunden ist. Eine Verstellung des Zug/Schubgliedes 27 entlang seiner Längsrichtung bewirkt eine entsprechende Translationsbewegung des Verstellelements 25, die über den Fortsatz 19 zu einem Verschwenken der Kugelaufnahme 17 um den Mittelpunkt C der Sensorkugel 15 führt.

Die Verstellvorrichtung 27 kann auch ein drehbares Kraftübertragungsglied sein, dessen Drehbewegung an dem sensorseitigen Ende der Verstellvorrichtung 27 in eine Translationsbewegung des Verstellelementes 25 umgesetzt wird, z.B. mittels eines Gewindes, das am sensorseitigen Ende des drehbaren Kraftübertragungsgliedes 27 ausgebildet ist und auf welches das Verstellelement 25, das mit einem komplementären Gewinde versehen ist, aufgesetzt ist. Somit wirkt eine Drehung des drehbaren Kraftübertragungsgliedes 27 in der gleichen Weise wie eine translatorische Verschiebung des Zug/Schubgliedes.

Das zu dem sensorseitigen Ende der Verstellvorrichtung 27 entgegengesetzte (nicht dargestellte) Ende der Verstellvorrichtung 27 steht mit einer geeigneten Einrichtung wie einem (nicht dargestellten) Getriebe in Verbindung, das ein Verschwenken der Lehne des Fahrzeugsitzes abgreift und ein solches Einwirken auf das Verstellelement 25 gewährleistet, daß die Orientierung des Sensors 10 unabhängig von der Lehnenneigung beibehalten wird.

## Patentansprüche

1. Sensor für die fahrzeugsensitive Auslösung des Sperrmechanismus eines Sicherheitsgurtaufrollers in der Lehne eines Fahrzeugsitzes, mit einer Kugelaufnahme (17), die eine Mulde (16) zur Aufnahme einer Sensorkugel (15) aufweist, und einem schwenkbar gelagerten, auf der Sensorkugel (15) aufliegenden Sensorhebel (20), wobei die Kugelaufnahme (17) um eine durch den Mittelpunkt (C) der Sensorkugel (15) verlaufende Achse schwenkbar angeordnet ist, **dadurch gekennzeichnet, daß** nur die Kugelaufnahme (17) mittels eines Verstellelements (25), das translatorisch bewegbar ist, verstellbar ist.

2. Sensor nach Anspruch 1, **dadurch gekennzeichnet, daß** die Kugelaufnahme (17) mit einem Fortsatz (19) versehen ist, an dem das Verstellelement (25) angreift.

3. Sensor nach Anspruch 1 oder 2, **dadurch gekennzeichnet, daß** das Verstellelement (25) durch ein Zug/Schubglied bewegbar ist.

4. Sensor nach Anspruch 1 oder 2, **dadurch gekennzeichnet, daß** das Verstellelement (25) durch ein drehbares Kraftübertragungsglied (27) bewegbar ist.

5. Sensor nach einem der vorhergehenden Ansprüche, **dadurch gekennzeichnet, daß** die Kugelaufnahme (17) mit einer Sensorgrundplatte (12) durch eine zum Mittelpunkt (C) des Sensorkugel (15) konzentrische Schwalbenschwanzführung (18) verbunden ist.

## Claims

1. A sensor for the vehicle-sensitive triggering of the locking mechanism of a safety belt retractor mounted in the back of a vehicle seat, comprising a ball seat (17) which has a trough (16) for accommodation of a sensor ball (15), and a pivotally mounted sensor lever (20) resting on the sensor ball (15), the ball seat (17) being pivotally mounted about an axis extending through the centre (C) of the sensor ball (15), **characterized in that** only the ball seat (17) is adjustable by means of an adjusting element (25) which is adapted to perform translatory movement.

2. The sensor as set forth in claim 1, **characterized in that** the ball seat (17) is provided with an extension (19) which is engaged by the adjusting element (25).

3. The sensor as set forth in claim 1 or 2, **characterized in that** the adjusting element (25) is subject to movement by a push-pull member.

4. The sensor as set forth in claim 1 or 2, **characterized in that** the adjusting element (25) is subject to movement by a rotatable load transmission member (27).

5. The sensor as set forth in any of the preceding claims, **characterized in that** the ball seat (17) is connected to a sensor base plate (12) by means of a dovetail guide (18) which is concentric with the centre (C) of the sensor ball (15).

## Revendications

1. Capteur pour le déclenchement sensible aux mouvements du véhicule, du mécanisme de blocage d'un enrouleur de ceinture de sécurité dans le dossier d'un siège de véhicule, comportant un logement de bille (17) qui présente une cavité (16) destinée à recevoir une bille de capteur (15) et un levier de capteur (20) monté à pivotement et reposant sur la bille de capteur (15), le logement de bille (10) étant agencé à pivotement autour d'un axe passant à travers le centre (C) de la bille de capteur (15), **caractérisé en ce que** seul le logement de bille (17) est réglable au moyen d'un élément de réglage (25) qui est déplaçable en translation.

2. Capteur selon la revendication 1, **caractérisé en ce que** le logement de bille (17) est pourvu d'un prolongement (19) sur lequel vient en prise l'élément de réglage (25).

3. Capteur selon la revendication 1 ou 2, **caractérisé en ce que** l'élément de réglage (25) est déplaçable par un organe de traction/poussée.

4. Capteur selon la revendication 1 ou 2, **caractérisé en ce que** l'élément de réglage (25) est déplaçable par un organe de transmission de force (27) rotatif.

5. Capteur selon l'une quelconque des revendications précédentes, **caractérisé en ce que** le logement de bille (17) est relié à une plaque d'embase de capteur (12) par un guidage en queue d'aronde (18) concentrique par rapport au centre (C) de la bille de capteur (18).
